(19) Europäisches Patentamt
European Patent Office
Office européen des brevets

(11) EP 1 529 815 B1

(12) EUROPEAN PATENT SPECIFICATION

(45) Date of publication and mention of the grant of the patent:
**25.03.2015 Bulletin 2015/13**

(21) Application number: **04256663.8**

(22) Date of filing: **28.10.2004**

(51) Int Cl.:
***C08L 101/08*** (2006.01) ***C09D 201/08*** (2006.01)
***C08L 57/04*** (2006.01) ***C09D 157/04*** (2006.01)
***C08L 33/06*** (2006.01) ***C09D 133/06*** (2006.01)
***C09D 5/02*** (2006.01) ***C08F 2/16*** (2006.01)
***C04B 41/48*** (2006.01) *C08F 265/06* (2006.01)
*C08F 220/18* (2006.01) *C08F 220/14* (2006.01)
*C08F 220/28* (2006.01) *C08F 220/06* (2006.01)
*C08F 2/22* (2006.01) *C08L 51/00* (2006.01)
*C09D 151/00* (2006.01) *C08K 3/00* (2006.01)
*C08F 226/02* (2006.01)

(54) **Aqueous polymer dispersion and method for preparing a coated substrate**

Wässrige Polymerdispersion sowie Verfahren zur Herstellung eines beschichteten Substrats

Dispersion aqueuse de polymère et procédé pour préparer un substrat revêtu

(84) Designated Contracting States:
**DE FR GB**

(30) Priority: **10.11.2003 US 518707 P**

(43) Date of publication of application:
**11.05.2005 Bulletin 2005/19**

(73) Proprietor: **ROHM AND HAAS COMPANY**
**Philadelphia,**
**Pennsylvania 19106-2399 (US)**

(72) Inventors:
- **Pressley, Ozzie Moore**
**Cheltenham, Pennsylvania 19012 (US)**
- **Zhang, Wei**
**Maple Glen, Pennsylvania 19002 (US)**

(74) Representative: **Buckley, Guy Julian et al**
**Patent Outsourcing Limited**
**1 King Street**
**Bakewell**
**Derbyshire DE45 1DZ (GB)**

(56) References cited:
**EP-A- 0 697 417** **EP-A- 1 197 532**
**EP-A- 1 203 796** **WO-A-95/09209**
**WO-A-99/14278** **WO-A-99/14279**
**US-A- 5 202 378**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 529 815 B1

## Description

This invention relates to an aqueous polymer dispersion containing acetoacetyl functional polymer particles and a surfactant. The aqueous polymer dispersion is useful for preparing coatings having improved adhesion to substrates. Also provided is a method for preparing a coated substrate employing the aqueous polymer dispersion.

Coating compositions, such as paints, are commonly applied to many surfaces, including exterior surfaces that have degraded as a result of weathering or other processes. Often, these exterior surfaces are porous and weak, and are subject to attrition on abrasion. Examples of such surfaces are the chalky surfaces of coatings, which have weathered to an extent that poorly consolidated pigment forms a surface layer on the coating; and masonry surfaces, weathered or not, which have a poorly consolidated surface. A substrate to which a coating is applied may have an entirely friable surface or only portions of the surface may be friable. One problem with such substrates is that aqueous coating compositions applied to these substrates often do not develop the requisite degree of adhesion between the surfaces of the substrates and the newly formed paint film.

EP-A-1203796 discloses an aqueous coating composition having improved adhesion to friable surfaces comprising an emulsion polymer consisting of at least one copolymerized ethylenically unsaturated non-ionic monomer having a water solubility of less than 8%, at least one copolymerized acid monomer such that the acid number of the emulsion polymer is 30 to 100, and 0.25-10% non-ionic surfactants selected from water-soluble alkyl phenol ethoxylates, alkyl alcohol ethoxylates and mixtures thereof.

EP-A-0697417 discloses a latex binder for producing a high gloss adherent coating on a weathered substrate, comprising an aqueous evaporable carrier having dispersed therein a latex polymer bearing an acid functional pendant moiety and enamine functional pendant moiety resulting from the reaction of acetoacetyl functional pendant moiety on said latex polymer with ammonia or amine, said polymer having a peak molecular weight in the range of 10,000 to 200,000, and an acid number in the range of 1 to 70.

U.S. Patent No. 4,771,100 discloses the use of ethoxylated fatty amines in the preparation of latexes having polymer particles containing about 0.1 to 10 weight percent of copolymerized carboxylic acid monomer. No use of these latexes, in combination with ethoxylated fatty amines, to improve adhesion to friable surfaces was disclosed.

The problem faced by the inventors is the provision of a suitable aqueous coating composition and a method for applying the aqueous coating composition so that adhesion to friable surfaces can be effected. The inventors have found that the adhesion of a coating prepared from an aqueous polymer dispersion containing certain polymer particles can be improved by the addition of a surfactant described below to the aqueous polymer dispersion.

The present invention, in its various aspects, is as set out in the accompanying claims.

The aqueous polymer dispersion of this invention comprises an aqueous medium; acetoacetyl functional polymer particles dispersed in said aqueous medium; and at least one alkyl ethoxylated phosphate surfactant comprising a $C_8$ to $C_{18}$ alkyl group attached to a polyoxyethylene chain having an average degree of polymerization in the range of from 20 to 100.

The method for preparing a coated substrate of this invention comprises the steps of: providing an aqueous polymer dispersion comprising: an aqueous medium; acetoacetyl functional polymer particles dispersed in said aqueous medium; and at least one alkyl ethoxylated phosphate surfactant comprising a $C_8$ to $C_{18}$ alkyl group attached to a polyoxyethylene chain having an average degree of polymerization in the range of from 20 to 100; applying said aqueous polymer dispersion to a substrate; and drying or allowing to dry said aqueous polymer dispersion applied to said substrate to provide said coated substrate.

Glass transition temperature" or "$T_g$" as used herein, means the temperature at or above which a glassy polymer will undergo segmental motion of the polymer chain. Glass transition temperatures of a polymer can be estimated by the Fox equation [Bulletin of the American Physical Society 1, 3 Page 123 (1956)] as follows:

$$\frac{1}{T_g} = \frac{w_1}{T_{g(1)}} + \frac{w_2}{T_{g(2)}}$$

For a polymer containing as polymerized units two different monomers, $w_1$ and $w_2$ refer to the weight fraction of the two comonomers, and $T_{g(1)}$ and $T_{g(2)}$ refer to the glass transition temperatures of the two corresponding homopolymers in Kelvin. For polymers containing three or more monomers, additional terms are added ($w_n/T_{g(n)}$). The $T_g$ of a polymer phase can also be calculated by using the appropriate values for the glass transition temperatures of a polymer containing as polymerized units only one type of monomer (homopolymer), which may be found, for example, in "Polymer Handbook", edited by J. Brandrup and E. H. Immergut, Interscience Publishers. The values of $T_g$ reported herein are calculated using the Fox equation.

As used herein, the use of the term "(meth)" followed by another term such as acrylate refers to both acrylates and methacrylates. For example, the term "(meth)acrylate" refers to either acrylate or methacrylate; the term "(meth)acrylic" refers to either acrylic or methacrylic; and the term "(meth)acrylamide" refers to either acrylamide or methacrylamide.

As used herein, the term "aqueous polymer dispersion" refers to a composition containing discrete polymer particles dispersed in an aqueous medium (e.g., aqueous polymer emulsion).

The term "pendant" is used in the specification to mean "attached to the polymer backbone as a side group, but not within the polymer backbone. The term "pendant" also includes attachment of such a group at the termini of a polymer chain.

The aqueous polymer dispersion of this invention may contain acetoacetoxy functional polymer particles dispersed in an aqueous medium. The acetoacetoxy functional polymer particles, which are vinyl addition polymers formed by the polymerization of ethylenically unsaturated monomers, have acetoacetoxy functional groups pendant to the polymer backbone. The acetoacetoxy functional groups are represented by:

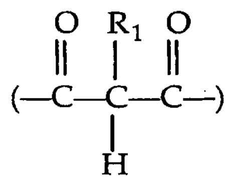

wherein $R_1$ is hydrogen, alkyl having 1 to 10 carbon atoms, or phenyl. Examples of acetoacetoxy functional groups are:

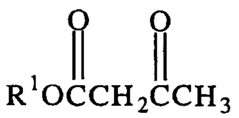

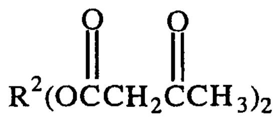

wherein $R^1$ is a divalent radical and $R^2$ is a trivalent radical, that attach the acetoacetoxy functional group to the polymer backbone. Suitable levels of acetoacetoxy functional groups may be in the range of from 4 x $10^{-5}$ to 1 x $10^{-4}$ mole of acetoacetoxy functional groups per gram of acetoacetoxy functional polymer particles.

The acetoacetyl functional polymer particles can be prepared by polymerization of acetoacetyl functional monomer, nonionic monomer, and optionally, ionic monomer.

Acetoacetyl functional monomers are monomers having an ethylenic unsaturation and one or more acetoacetyl moieties. These acetoacetyl functional monomers have the following structures:

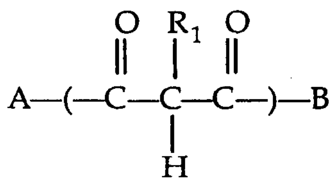

;

wherein A is either:

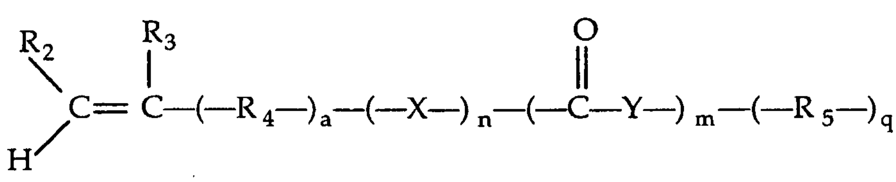

or

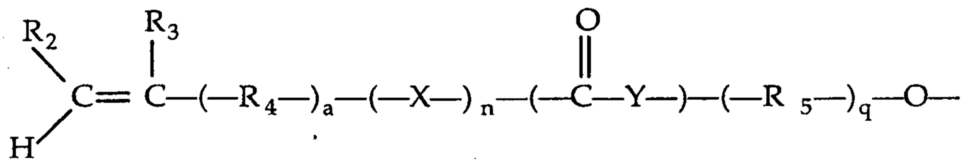

wherein $R_1$ is selected from H, alkyl having 1 to 10 carbon atoms, and phenyl; $R_2$ is selected from H, alkyl having 1 to 10 carbon atoms, phenyl, halo, $CO_2CH_3$, and CN; wherein $R_3$ is selected from H, alkyl having 1 to 10 carbon atoms, phenyl, and halo; wherein $R_4$ is selected from alkylene having 1 to 10 carbon atoms and phenylene; wherein $R_5$ is selected from alkylene having 1 to 10 carbon atoms and phenylene; wherein a, m, n, and q are independently selected from 0 and 1; wherein each of X and Y is selected from -NH- and -O-; and B is selected from A, alkyl having 1 to 10 carbon atoms, phenyl, and heterocyclic groups. Examples of acetoacetyl functional monomers include, among the following, acetoacetoxyalkyl (meth)acrylates such as acetoacetoxyethyl (meth)acrylate, acetoacetoxypropyl (meth)acrylate, acetoacetoxybutyl (meth)acrylate, and 2,3-di(acetoacetoxy)propyl (meth)acrylate; allyl acetoacetate; vinyl acetoacetate; various acetoacetamides, including, but not limited to:

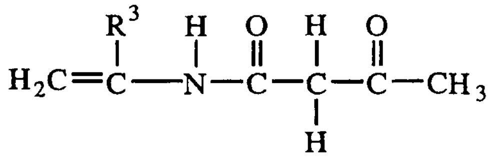

wherein $R^3$ is either H or methyl; and combinations thereof. Preferred acetoacetyl functional monomers include acetoacetoxyethyl (meth)acrylate, acetoacetoxypropyl (meth)acrylate, allyl acetoacetate, acetoacetoxybutyl (meth)acrylate, 2,3-di(acetoacetoxy)propyl (meth)acrylate, and combinations thereof. Suitable levels of polymerized acetoacetyl functional monomer in the acetoacetyl functional polymer particles include from 0.1 to 20 weight %, preferably from 0.5 to 10 weight %, and more preferably from 1 to 6 weight %, based on the weight of the acetoacetyl functional polymer particles. The acetoacetyl functional polymer particles contain one or more polymerized acetoacetyl functional monomers.

The acetoacetyl functional polymer particles also include as polymerized units nonionic monomer. A nonionic monomer is a monomer that contains at least one ethylenic unsaturated but does not have a pendant acid or base group. Further, nonionic monomer expressly excludes acetoacetyl functional monomer. Examples of nonionic monomers include styrene; butadiene; $\alpha$-methyl styrene; vinyl toluene; vinyl naphthalene; ethylene; propylene; vinyl acetate; vinyl versatate; vinyl chloride; vinylidene chloride; various $C_1$-$C_{40}$ alkyl esters of (meth)acrylic acid, such as methyl (meth)acrylate, ethyl (meth)acrylate, n-butyl (meth)acrylate, 2-ethylhexyl (meth)acrylate, cyclohexyl (meth)acrylate, n-octyl (meth)acrylate, n-decyl (meth)acrylate, n-dodecyl (meth)acrylate, tetradecyl (meth)acrylate, lauryl (meth)acrylate, oleyl (meth)acrylate, palmityl (meth)acrylate, and stearyl (meth)acrylate; other (meth)acrylates such as isobornyl (meth)acrylate, benzyl (meth)acrylate, phenyl (meth)acrylate, and 2-bromoethyl (meth)acrylate; alkoxyalkyl (meth)acrylates, such as ethoxyethyl (meth)acrylate; full esters of ethylenically unsaturated di- and tricarboxylic acids and anhydrides, such as diethyl maleate, dimethyl fumarate, and ethyl methyl itaconate. Other suitable nonionic monomers include multiethylenically unsaturated monomers, which are effective for increasing the molecular weight of the copolymer particles. Examples of multiethylenically unsaturated monomers include tripropylene glycol di(meth)acrylate, diethylene glycol di(meth)acrylate, ethylene glycol di(meth)acrylate, 1,6-hexanediol di(meth)acrylate, 1,3-butylene glycol di(meth)acrylate, polyalkylene glycol di(meth)acrylate, diallyl phthalate, trimethylolpropane tri(meth)acrylate, divinylbenzene, divinyltoluene, trivinylbenzene, and divinyl naphthalene. Suitable levels of polymerized nonionic monomer in the acetoacetyl functional polymer particles include from 70 to 99.9 weight %, preferably from 80 to 99.5 weight %, and more preferably, from 84 to 99 weight %, based on the weight of the acetoacetyl functional polymer particles. The acetoacetyl functional polymer particles contain one or more polymerized nonionic monomers.

The acetoacetyl functional polymer particles optionally include as polymerized units at least one ionic monomer. The polymerized ionic monomer may be included in the acetoacetyl functional polymer particles to help stabilize the polymer particles in the aqueous medium. As used herein, "ionic monomer" expressly excludes acetoacetyl functional monomers and nonionic monomers. The ionic monomer may be an anionic monomer or alternatively, a cationic monomer. As used herein, "anionic monomer" refers to an ionic monomer that contains at least one pendant acid group or salt thereof. Anionic monomers include carboxylic acid containing monomers such as (meth)acrylic acid, itaconic acid, fumaric acid, and maleic acid; anhydrides, which can form carboxylic acid monomers in the presence of water, such as itaconic anhydride and maleic anhydride; and partial esters of multicarboxylic acid monomers, such as ethyl maleate. Other

examples of acid containing monomers are phosphorus acid monomers such as 2-phosphoethyl (meth)acrylate; and sulfur acid monomers such as sodium vinyl sulphonate, 2-acrylamido-2-methylpropane sulfonic acid, vinyl sulphonic acid, styrene sulphonic acid, sulfoethyl (meth)acrylate, and methacryloxyisopropyl acid sulfophthalate, and hydroxy, dihydroxy, amino or diamino alkyl or aryl sulfonic acids, such as, 1,4-butanediol 2-sulfonic acid. As used herein, "cationic monomer" refers to an ionic monomer that contains at least one pendant base group or salt thereof. Examples of cationic monomers are amine functional monomers such as 2-vinoxyethylamine, 2-vinoxyethylethylene-diamine, 3-aminopropyl vinyl ether, 2-amino-2-methylpropyl vinyl ether, and 2-aminobutyl vinyl ether; and amide containing monomers such as (meth)acrylamide. In certain non-limiting embodiments, the acetoacetyl functional polymer particle contains as polymerized units both anionic monomer and cationic monomer. Suitable levels of polymerized ionic monomer in the acetoacetyl functional polymer particles include from zero to 10 weight %, preferably from 0.1 to 6 weight %, and more preferably, from 0.5 to 3 weight %, based on the weight of the acetoacetyl functional polymer particles. The acetoacetyl functional polymer particles may contain one or more polymerized ionic monomers.

The types and levels of the acetoacetyl functional monomer, the nonionic monomer, and the optional ionic monomer may be chosen to provide the acetoacetyl functional polymer particles with a glass transition temperature suitable for an intended end use. Suitable ranges for the glass transition temperature of the acetoacetyl functional polymer particles include the range of from -60 °C to 100 °C, preferably the range of from -20 °C to 50 °C, and more preferably the range of from -10 °C to 40 °C.

Typically, the acetoacetyl functional polymer particles have an average diameter in the range of from 50 nanometers (nm) to 1 μm, preferably in the range of from 60 nm to 500 nm, and more preferably in the range of from 80 nm to 350 nm. The average polymer particle diameter may be determined by a quasi-elastic light scattering technique, using an instrument such as a Brookhaven Model BI-90 Particle Sizer, supplied by Brookhaven Instruments Corporation, Holtsville, NY.

Suitable morphologies for the acetoacetyl functional polymer particles include polymer particles having a single polymer phase; and polymer particles having two or more polymer phases. Examples of polymer particles having two or more polymer phases include core/shell polymer particles in which one polymer phase is fully or partially encapsulated by a different polymer phase; polymer particles having multiple polymer microdomains within a continuous polymer phase; interpenetrating network polymers; and multilobe polymer particles.

The acetoacetyl functional polymer particles contained in the aqueous polymer dispersion of the present invention may be prepared by well known polymerization techniques, such as suspension polymerization or emulsion polymerization of ethylenically unsaturated monomers. Emulsion polymerization is preferred. Suitable processes are disclosed in U.S. Patent 5,356,968 and U.S. Patent 5,264,530. An alternate process to prepare the acetoacetyl functional polymer particles is solution polymerization followed by the conversion of the solution polymer to the acetoacetyl functional polymer particles by various methods known in the art. Suitable polymer processes, which include emulsion polymerization, solution polymerization, and suspension polymerization process, may be conducted as batch, semicontinuous, or continuous processes. Aqueous emulsion polymerization is a preferred process for preparing the acetoacetyl functional polymer particles. Temperatures suitable for aqueous emulsion polymerization processes are in the range of from 20 °C to less than 100 °C, preferably in the range of from 50 °C to 90 °C. The polymerization processes commonly employ various synthesis adjuvants such as thermal or redox polymerization initiators, chain transfer agents, catalysts, surfactants, high molecular weight polymers, dispersants, salts, buffers, acids, or bases. Preferably the use of organic solvents is minimized in the polymerization process to provide an aqueous polymer dispersion with low levels of volatile organic compounds (VOCs). The aqueous polymer dispersion containing the acetoacetyl functional polymer particles is optionally treated to remove VOCs by processes such as steam stripping or distillation.

The aqueous polymer dispersion of this invention also contains an aqueous medium in which the acetoacetyl functional polymer particles are dispersed. The aqueous medium optionally contains cosolvents including water miscible cosolvents such as methanol, ethanol, propanol, acetone, ethylene glycol ethyl ethers, propylene glycol propyl ethers, and diacetone alcohol; and water immiscible solvents such as propyl acetate, butyl acetate, methyl isoamyl ketone, amyl acetate, diisobutyl ketone, xylene, toluene, butanol, and mineral spirits. The aqueous polymer dispersion may be provided with 10 to 70 weight % polymer particles, based on the weight of the polymer composition. Preferably, one or more bases are added to the aqueous polymer dispersion to raise the pH to a value in the range of from 8 to 11, and more preferably in the range of from 9 to 11, in order to minimize hydrolysis of the pendant acetoacetyl groups. Suitable bases include ammonia, or primary amines such as ethanolamine, methyl amine, or isopropyl amine.

The aqueous polymer dispersion of this invention also contains an alkyl ethoxylated phosphate surfactant, which may be provided in the acid form or in the salt form. The alkyl ethoxylated phosphate surfactant has an $C_8$ to $C_{18}$ alkyl group attached to a polyoxyethylene chain having an average degree of polymerization in the range of from 20 to 100. The alkyl ethoxylated phosphate surfactant may be represented by the structure:

$$R\text{-}(EO)_n\text{-}OPO_3X_2$$

wherein R is a $C_8$ to $C_{18}$ alkyl group; EO is a polymerized ethylene oxide unit; n is an integer with a value in the range of from 20 to 100; and each X is independently selected from H or a cation. Examples of suitable cations include alkali metal cations such as lithium, sodium, or potassium; ammonia; and amines such as dimethyl amine, triethanol amine, and methyl amine. The aqueous polymer dispersion contains one or more of these alkyl ethoxylated phosphate surfactants. The concentration of the alkyl ethoxylated phosphate surfactant in the aqueous polymer dispersion is typically in the range from 0.1 to 5 weight %, preferably in the range of from 0.1 to 3 weight %, and more preferably in the range of from 0.5 to 3 weight %, based on the weight of the acetoacetyl functional polymer particles. The alkyl ethoxylated phosphate surfactant may be added to the aqueous polymer dispersion containing the acetoacetyl functional polymer particles, added to the aqueous medium prior to or during the polymerization of the acetoacetyl functional polymer particles, or combinations thereof. In one non-limiting embodiment, the alkyl ethoxylated phosphate surfactant included in the aqueous polymer dispersion has a polyoxyethylene chain having an average degree of polymerization in the range of from 25 to 50, and preferably in the range of from 30 to 50. In a different non-limiting embodiment, the alkyl ethoxylated phosphate surfactant has $C_{12}$ to $C_{18}$ alkyl group.

In addition, the aqueous polymer dispersion optionally includes other components, including other polymers, surfactants, pigments such as titanium dioxide, extenders, dyes, pearlescents, adhesion promoters, crosslinkers, dispersants, defoamers, leveling agents, optical brighteners, ultraviolet stabilizers, absorbing pigments, coalescents, rheology modifiers, preservatives, biocides, polymer particles having internal voids, and antioxidants. The aqueous polymer dispersion may contain coalescent in the amount of from 0 weight % to 40 weight %, more preferably 0 weight % to 20 weight %, and most preferably 0 weight % to 5 weight %, based on the weight of the comb copolymer. Preferably, the aqueous polymer dispersion is absent coalescent.

In one embodiment, the aqueous polymer dispersion includes a material selected from the group consisting of titanium dioxide, zinc oxide, voided polymer particles, clay and calcium carbonate.

The aqueous polymer dispersion may contain acetoacetyl functional polymer particles having a multimodal particle diameter distribution, such as a bimodal distribution. In one non-limiting embodiment, the aqueous polymer dispersion contains a small mode of acetoacetyl functional polymer particles and a large mode of acetoacetyl functional polymer particles, wherein the small mode has an average particle diameter in the range of from 50 to 150 nm, and the large mode has an average particle diameter of less than 400 nm but larger than the average particle diameter of the small mode. Further, in this non-limiting embodiment, the ratio of the small mode acetoacetyl functional polymer particles to the large mode acetoacetyl functional polymer particles may be in the range of from 1:9 to 9:1 by weight.

In one non-limiting embodiment, the aqueous polymer dispersion of this invention further contains at least one unsaturated fatty acid ester. The unsaturated fatty acid ester is a coalescent and lowers the minimum film formation temperature of the polymer particles having pendant acetoacetyl groups. The unsaturated fatty acid ester is also autoxidizable in the presence of atmospheric oxygen. After formation of a dry film from the aqueous polymer dispersion, the oxidation of the unsaturated fatty acid ester results in the reduction or the elimination of the coalescent activity of the unsaturated fatty acid ester, leading to increased hardness in the dry film. Further, the oxidation of the unsaturated fatty acid ester results in the formation of reactive species, which are capable of increasing the rate of reaction of the pendant acetoacetyl groups of the coalesced polymer particles forming the dry film and enhancing the rate or the extent of crosslinking in the dry film. Crosslinks may be formed between reacted pendant acetoacetyl groups, between reacted unsaturated fatty acid esters, or between an acetoacetyl group and an unsaturated fatty acid ester.

The unsaturated fatty acid esters suitable for use in the composition of this invention are characterized by the chemical structure $R_1C(O)OR_2$, wherein $R_1C(O)O$ is an unsaturated fatty acid component and $R_2$ is an organic group that forms the ester component. The group $R_1$ is a $C_8$ to $C_{28}$ hydrocarbon containing at least one unsaturated bond. The degree of unsaturation of the $R_1$ group is either monounsaturated or polyunsaturated, such as diunsaturated and triunsaturated. Suitable unsaturated fatty acid esters include monounsaturated fatty acids formed from palmitoleic acid, oleic acid, or caproleic acid; diunsaturated fatty acid esters formed from linoleic acid; triunsaturated fatty acid esters formed from linolenic acid or eleosteric acid, or mixtures thereof. Preferred are unsaturated fatty acid esters formed from monounsaturated, diunsaturated fatty acids, or mixtures thereof. More preferred are unsaturated fatty acid esters formed from diunsaturated fatty acid. The organic group, $R_2$, which forms the ester component of the unsaturated fatty acid ester, typically contains from 1 to 8 carbon atoms, and includes substituted or unsubstituted alkyl groups containing from 1 to 8 carbons, and alkyl ether groups. Examples of suitable unsubstituted alkyl groups include alkyl groups such as methyl, ethyl, n-propyl, isopropyl, and t-butyl groups. Examples of suitable substituted alkyl groups include alkyl groups containing alcohol moieties such as organic groups formed from ethylene glycol and propylene glycol. Examples of suitable alkyl ether groups include groups formed from polyethers such as diethylene glycol, triethylene glycol, dipropylene glycol, tripropylene glycol, and diethylene glycol monobutyl ether. Preferred unsaturated fatty acid esters include methyl and ethyl esters of diunsaturated fatty acids; and unsaturated fatty acid esters formed from ethylene glycol or propylene glycol.

Suitable sources for preparing the unsaturated fatty acid esters include unsaturated fatty acids or mixtures of unsaturated fatty acids derived from plant sources such as corn oil, cotton seed oil, peanut oil, olive oil, castor oil,

dehydrated castor oil, wheat germ oil, poppy seed oil, safflower oil, soybean oil, and sunflower seed oil.

In one non-limiting embodiment, the aqueous polymer dispersion contains an unsaturated fatty ester or a mixture of unsaturated fatty acid esters having an average iodine number of at least 50, preferably at least 80, and more preferably at least 100. The average iodine number is a measure of the degree of unsaturation of the unsaturated fatty acid ester or the mixture of unsaturated fatty acid esters, and is determined using ASTM method 1959-97. Preferably, the aqueous polymer dispersion of this non-limiting embodiment contains less than 10 weight % triunsaturated fatty acid ester, preferably, less than 8 weight %, and more preferably at least less than 5 weight %, based on the total weight of the unsaturated fatty acid esters contained in the aqueous polymer dispersion.

A volatile organic compound ("VOC") is defined herein as a carbon containing compound that has a boiling point below 280 °C at atmospheric pressure. Compounds such as water and ammonia are excluded from VOCs.

In one non-limiting embodiment, aqueous polymer dispersion of this invention contains less than 5% VOC by weight based on the total weight of the aqueous polymer dispersion; preferably the aqueous polymer dispersion contains less than 3% VOC by weight based on the total weight of the aqueous polymer dispersion; more preferably the aqueous polymer dispersion contains less than 1.7% VOC by weight based on the total weight of the aqueous polymer dispersion. A "low VOC" aqueous polymer dispersion herein is an aqueous polymer dispersion that contains less than 5% VOC by weight based on the total weight of the aqueous polymer dispersion; preferably it contains between 0.01% and 1.7% by weight based on the total weight of the aqueous polymer dispersion.

Typical methods of paint or coating preparation may introduce adventitious VOCs from the aqueous polymer dispersion containing the acetoacetyl functional polymer particles, biocides, defoamers, soaps, dispersants, or thickeners. These typically account for 0.1% VOC by weight based on the total weight of the aqueous polymer composition. Additional methods such as steam stripping and choice of low VOC containing additives like biocides, defoamers, soaps, dispersants, and thickeners are suitable for further reducing the aqueous polymer composition to less than 0.01% VOC by weight based on the total weight of the aqueous polymer composition.

A method of forming a coated substrate from the aqueous polymer dispersion of this invention includes: providing the aqueous polymer dispersion; applying the aqueous polymer dispersion onto a substrate; drying or allowing to dry the aqueous polymer dispersion that was applied onto the substrate to provide the coated substrate. The aqueous polymer dispersion may be applied onto friable substrates, such as weathered substrates or chalky substrates. The method may be employed for improving the adhesion of a coating to a friable substrate.

The aqueous polymer dispersion may be applied on a substrate using various techniques including, for example, brushing, rolling, drawdown, dipping, with a knife or trowel, curtain coating, and spraying methods such as, for example, air-atomized spray, air-assisted spray, airless spray, high volume low pressure spray, and air-assisted airless spray. The wet coating thickness of the applied aqueous polymer dispersion may be in the range of 1 micrometer to 250 micrometers. The aqueous polymer dispersion is applied onto a substrate as a single coat or multiple coats. After application, the applied aqueous polymer dispersion is typically allowed to dry at ambient conditions or alternatively dried by the application of heat to provide a dry coating. Drying is typically allowed to proceed under ambient conditions such as, for example, at 0 °C to 35 °C.

The aqueous polymer dispersion is suitable for application onto various substrates including processed timber such as medium density fiber board, chip board, laminates; mineral substrates such as masonry, cement, fiber cement, cement asbestos, plaster, plasterboard, glazed and unglazed ceramic; metal substrates such as galvanized iron, galvanized steel, cold rolled steel, aluminum, wrought iron, drop forged steel, stainless steel; previously painted or primed surfaces (fresh, aged or weathered) including but not limited to acrylic coatings, vinyl acrylic coatings, styrene acrylic coatings, powder coated surfaces, solvent acrylic coatings, alkyd resin coatings, solvent urethane coatings, epoxy coatings; cellulosic substrates such as paper and paperboard; glass; asphalt; leather; wallboard; nonwoven materials; and synthetic substrates such as polyvinyl chloride, polyvinylidene chloride, polyethylene, and polypropylene.

The dry coating prepared from the aqueous polymer dispersion is suitable as a protective coating or an aesthetic coating. Examples of suitable coatings include architectural coatings such as interior and exterior paint coatings, including masonry coatings, wood coating and treatments; floor polishes; maintenance coatings such as metal coatings; paper coatings; and traffic coatings such as those coatings used to provide markings on roads, pavements, and runways.

The following examples are presented to illustrate the process and the composition of the invention. These examples are intended to aid those skilled in the art in understanding the present invention. The present invention is, however, in no way limited thereby.

The following materials were used in the examples:

| | |
|---|---|
| AA | acrylic acid |
| AAEM | acetoacetoxyethyl methacrylate |
| BA | butyl acrylate |
| g | grams |
| MAA | methacrylic acid |

MMA methyl methacrylate acid
nm nanometer
tBHP tert-butyl hydroperoxide
wt. % weight %

Surfactant A 25 weight % aqueous solution of ammonium ethoxylated $C_8$-$C_{18}$ alkyl ether phosphate having 1 to 20 ethylene oxide units per molecule.
Surfactant B 70 weight % aqueous solution of ammonium ethoxylated $C_8$-$C_{18}$ alkyl ether phosphate having 20 to 100 ethylene oxide units per molecule.
Surfactant C 25 weight % aqueous solution of ammonium ethoxylated $C_8$-$C_{18}$ alkyl phenol ether phosphate having 1 to 20 ethylene oxide units per molecule.
Surfactant D 70 weight % aqueous solution of ammonium ethoxylated $C_8$-$C_{18}$ alkyl phenol ether phosphate having 20 to 100 ethylene oxide units per molecule.

Example 1 - Preparation of Acetoacetoxy Functional Polymers and Aqueous Polymer Dispersions

The aqueous dispersions were prepared in a 5-liter, four necked round bottom flask equipped with a paddle stirrer, a thermometer, a nitrogen inlet, and a reflux condenser.

Comparative A: A mixture of 43.2 g of Surfactant A and 1000 g of deionized water was added to the flask and heated to 82 °C under a nitrogen atmosphere. A monomer emulsion (ME) was prepared by mixing 520 g of deionized water, 129.6 g of Surfactant A, 972 g BA, 738 g MMA, 36 g AA, and 9 g of 1-dodecanethiol. With the contents of the flask at 78 °C, the following materials were added in order: a solution of 3.6 g of ammonium bicarbonate in 30 g of deionized water, a mixture of 80 g of an acrylic polymer emulsion (100 nm, 45 wt. % solids) and 20 g of deionized water, and a mixture of 20 g of a solution of 0.1 wt. % iron sulfate in water, and 1.5 g of a solution of 1 wt. % tetrasodium salt of ethylenediaminetetraacetic acid in water. The ME was then added to the flask over a period of less than 3 hours while maintaining the contents of the flask at a temperature of 80 °C. A solution of 3.9 g of 70% tBHP in 100 g of deionized water and a solution of 2.6 g of isoascorbic acid in 100 g of deionized water were coadded along with the monomer emulsion addition over the same length of time. When 75 wt. % of the ME was added, 54 g AAEM was added to the ME container. After the complete addition of the ME, the ME container was rinsed with 50 g of deionized water. After 20 minutes, a solution of 1.0 g of 70% tBHP in 30 g of deionized water and a solution of 0.7 g of isoascorbic acid in 30 g of deionized water were added over a period of less than 60 minutes and the contents of the flask was allowed to cool to 45 °C. Next, a solution of 45.7 g of 28% ammonium hydroxide was added and the contents of the flask was filtered to remove any coagulum. The resulting comparative aqueous polymer dispersion, Comparative A, had a pH of 9.1 and 46.5 wt. % solids. Examination of the dispersion with CHDF showed that it has two distinctive modes (34% at 189 nm and 66% at 79 nm by weight).
Example 1.1 - An aqueous polymer dispersion was made by addition of a solution of 22.8 g of Surfactant B and a solution of 4 g of 28% ammonium hydroxide in 50 g of deionized water to 1790 g of the Comparative A with stirring. The resulting aqueous polymer dispersion, Example 1.1, had 45.5 wt. % solids.
Comparative B - A comparative aqueous polymer dispersion was prepared according to the general procedure for Comparative A, expect that the monomer emulsion was prepared by mixing 520 g of deionized water, 129.6 g of Surfactant A, 972 g BA, 738 g MMA, 36 g AA, and 13.5 g of 1-dodecanethiol. The resulting comparative aqueous polymer dispersion, Comparative B, had a pH of 9.2 and 46.6 wt. % solids. Examination of the dispersion with CHDF showed that it has two distinctive modes (32% at 186 nm and 68% at 79 nm by weight).
Example 1.2 - An aqueous polymer dispersion was made by addition of a solution of 22.2 g of Surfactant B and a solution of 4 g of 28% ammonium hydroxide in 50 g of deionized water to 1749 g of the Comparative B with stirring. The resulting aqueous polymer dispersion, Example 1.2 had 45.5 wt. % solids.
Comparative C. To the flask was added 620 g of deionized water. The contents of the flask was heated to 84 °C under a nitrogen atmosphere. A monomer emulsion (ME) was prepared by mixing 526 g of deionized water, 95.2 g of Surfactant A, 918 g BA, 694.8 g MMA, 25 g MAA, and 8.5 g of 1-dodecanethiol. With the contents of the flask at 84 °C, the following materials were added in order: a solution of 6.8 g of ammonium bicarbonate in 30 g of deionized water, a mixture of 78.2 g of an acrylic polymer emulsion (100 nm, 45% solids) and 10 g of deionized water, and 13.6 g of a solution of 0.15 wt. % iron sulfate in water, and 1.36 g of a solution of 1 wt. % tetrasodium salt of ethylenediaminetetraacetic acid in water. The ME was added to the flask over a period of less than 3 hours while maintaining the contents of the flask at a temperature of 80 °C. A solution of 4.6 g of 70 wt. % tBHP in 88.4 g of deionized water and a solution of 3.2 g of isoascorbic acid in 88.4 g of deionized water were coadded along with the monomer emulsion addition over the same length of time. When about 4 wt. % of the ME was added to the flask, a solution of 54.4 g of surfactant A in 11 g of deionized water was added to the flask. When 75 wt. % of the ME was

added, a mixture of 51 g AAEM, 11.2 g MAA, and 17 g of deionized water was added to the ME container. After the completion of the monomer addition, the ME container was rinsed with 34 g of deionized water. A solution of 0.68 g of tBHP in 5 g of deionized water was added, followed by a solution of 0.37 g of isoascorbic acid in 11 g of deionized water. After 20 minutes, a solution of 0.70 g of 70% tBHP in 7.3 g of deionized water and a solution of 0.46 g of isoascorbic acid in 12.8 g of deionized water were added over a period of less than 60 minutes and the contents of the flask was allowed to cool to a temperature of 45 °C. Next, 36.6 g of 28% ammonium hydroxide was added. After dilution with 112 g of deionized water, the contents of the flask was filtered to remove any coagulum. The resulting comparative aqueous polymer dispersion, Comparative C, had a pH of 9, and 50.0 wt. % solids. Examination of the dispersion with CHDF showed that it has two distinctive modes (56% at 244 nm and 44% at 83 nm by weight).

Example 1.3 - To the flask was added 620 g of deionized water. The contents of the flask was heated to 84 °C under a nitrogen atmosphere. A monomer emulsion (ME) was prepared by mixing 526 g of deionized water, 95.2 g of Surfactant A, 918 g BA, 694.8 g MMA, 25 g MAA, and 8.5 g of 1-dodecanethiol. With the contents of the flask at a temperature of 84 °C, the following materials were added in order: a solution of 6.8 g of ammonium bicarbonate in 30 g of deionized water, a mixture of 78.2 g of an acrylic polymer emulsion (100 nm, 45 wt. % solids) and 10 g of deionized water, 13.6 g of a solution of 0.15 wt. % iron sulfate in water, and 1.36 g of a solution of 1 wt. % tetrasodium salt of ethylenediaminetetraacetic acid in water. The ME was then added to the flask over a period of less than 3 hours at 80 °C. A solution of 4.6 g of 70 wt. % tBHP in 88.4 g of deionized water and a solution of 3.2 g of isoascorbic acid in 88.4 g of deionized water were coadded along with the ME addition over the same length of time. When about 4 wt. % of the ME was added to the flask, a solution of 54.4 g of surfactant A in 11 g of deionized water was added to the flask. When 75 wt. % of the ME was added, a mixture of 51 g AAEM, 11.2 g MAA, and 17 g of deionized water was added to the ME container. After the completion of the ME addition, the ME container was rinsed with 34 g of deionized water. A solution of 0.68 g of tBHP in 5 g of deionized water was added, followed by the addition of a solution of 0.37 g of isoascorbic acid in 11 g of deionized water. After 20 minutes, a solution of 0.70 g of 70 wt. % tBHP in 7.3 g of deionized water and a solution of 0.46 g of isoascorbic acid in 12.8 g of deionized water were added over a period of less than 60 minutes. The contents of the flask was cooled to 45 °C. Next, 18.7 g of 28% ammonium hydroxide was added. A solution of 48.5 g of Surfactant B and 11.9 g of 28% ammonium hydroxide in 128 g of deionized water were added. The contents of the flask was filtered to remove any coagulum. The resulting aqueous polymer dispersion, Example 1.3, had a pH of 8.7 and 50.4 wt. % solids. Examination of the dispersion with CHDF showed that it has two distinctive modes (57% at 229 nm and 43% at 77 nm by weight).

Comparative D - To the flask was added 620 g deionized water. The contents of the flask were heated to 84 °C under a nitrogen atmosphere. A monomer emulsion (ME) was prepared by mixing 526 g of deionized water, 95.2 g of Surfactant C, 918 g BA, 694.8 g MMA, 25 g MAA, and 8.5 g of 1-dodecanethiol. With the contents of the flask at a temperature of 84 °C, the following materials were added in order: a solution of 6.8 g of ammonium bicarbonate in 30 g of deionized water, a mixture of 78.2 g of an acrylic polymer emulsion (100 nm, 45% solids) and 10 g of deionized water, and 13.6 g of a solution of 0.15 wt. % iron sulfate in water, and 1.36 g of a solution of 1 wt. % tetrasodium salt of ethylenediaminetetraacetic acid in water. The ME was then added to the flask over a period of less than 3 hours at 80 °C. A solution of 4.6 g of 70 wt. % tBHP in 88.4 g of deionized water and a solution of 3.2 g of isoascorbic acid in 88.4 g of deionized water were coadded along with the monomer emulsion addition over the same length of time. When about 4 wt. % of the ME was added to the flask, a solution of 54.4 g of surfactant C in 11 g of deionized water was added to the flask. When 75 wt. % of the ME was added, a mixture of 51 g AAEM, 11.2 g MAA, and 17 g of deionized water was added to the ME container. After the complete addition of the ME, the ME container was rinsed with 34 g of deionized water. A solution of 0.68 g of tBHP in 5 g of deionized water was added, followed by the addition of a solution of 0.37 g of isoascorbic acid in 11 g of deionized water. After 20 minutes, a solution of 0.70 g of 70 wt. % tBHP in 7.3 g of deionized water and a solution of 0.46 g of isoascorbic acid in 12.8 g of deionized water were added over a period of less than 60 minutes. The contents of the flask was cooled to 45 °C. Next, 36.6 g of 28% ammonium hydroxide was added. A solution of 48.5 g of Surfactant D and 11.9 g of 28% ammonium hydroxide in 128 g of deionized water was added. The contents of the flask was filtered to remove any coagulum. The resulting comparative aqueous dispersion, Comparative D, had a pH of 9.2 and 49.8 wt. % solids. Examination of the dispersion with CHDF showed that it has two distinctive modes (58% at 256 nm and 42% at 87 nm by weight).

Table 1.1 - Weight % $C_8$-$C_{20}$ Alkyl $(EO)_{20-100}$ Phosphate Surfactant in Aqueous Polymer Dispersions and Comparative Aqueous Polymer Dispersions

| Example | $C_8$-$C_{20}$ Alkyl $(EO)_{20-100}$ Phosphate Surfactant (Wt. %)* |
|---|---|
| Example 1.1 | 1.77 |

(continued)

| Example | $C_8$-$C_{20}$ Alkyl $(EO)_{20-100}$ Phosphate Surfactant (Wt. %)* |
|---|---|
| Example 1.2 | 1.91 |
| Example 1.3 | 1.95 |
| Comparative A | 0 |
| Comparative B | 0 |
| Comparative C | 0 |
| Comparative D | 0 |
| *based on weight of acetoacetoxy functional polymer particles | |

Example 2 - Preparation of Aqueous Coating Compositions

A pigment dispersion was prepared by combining 46.63 g water, 23 g propylene glycol, 8.57 g Tamol™ 681 dispersant (Rohm and Haas Company, Philadelphia, PA), 2 g Tergitol™ 15-S-40 surfactant (Union Carbide Company, CT), 3 g Drewplus™ L-475 defoamer (Drew Chemical Corp., NJ), 5 g Acrysol™ RM-2020 thickener (Rohm and Haas Company), and 2 g Skane™ M-8 biocide (Rohm and Haas Company). The vessel was then placed on a bench top mixer and the ammonia was slowly added with stirring to raise the pH to a value of 9. The contents of the vessel was transferred to a COWLES high speed disperser (Cowles Dissolver Company, Inc., NY). While the disperser was operating at low speed (1000 rpm), the dry ingredients were added in the following order; 0.5 g Natrosol™ 250 HR hydroxyethyl cellulose (Aqualon Co, DE), 165 g Ti-Pure™ R-706 titanium dioxide (E.I. Du Pont de Nemours and Company, Wilmington, DE), 120.84 g Minex™ 4 nepheline syenite (Unimin Canada Ltd., Toronto, Canada), 12 g Kadox™ 915 zinc oxide (G & W Natural Resources Co., TN), and 2 g Attagel™ 50 hydrated aluminum magnesium silicate (Engelhard Corp, NJ).

Aqueous coating compositions were prepared by combining the pigment dispersion with the aqueous polymer dispersion, 4.12 g 2,2,4-trimethyl-1,3-pentanediol monoisobutyrate, 12 g Acrysol™ RM-2020 NPR thickener, 7.84 g Acrysol™ RM-8W thickener, 0.65 g ammonia, and 218.05 g water. The amounts of aqueous polymer dispersion and water added to prepare the aqueous coating composition are listed in Table 2.1

Table 2.1 Aqueous Coating Compositions

| Example | Aqueous polymer dispersion | Water |
|---|---|---|
| Example 1.1 | 452.71 g | 218.05 g |
| Example 1.2 | 452.51 g | 254.73 g |
| Example 1.3 | 410.42 g | 285.14 g |
| Comparative A | 442.59 g | 264.68 g |
| Comparative B | 442.31 g | 266.01 g |
| Comparative C | 399.30 g | 298.05 g |
| Comparative D | 411.32 g | 283.34 g |

Example 3 - Preparation and Testing of Coated Samples

Test panels having a chalky surface were prepared by applying an exterior latex paint onto primed cedar panels. The exterior latex paint contained 32.3 kilograms per 100 liters (269 pounds of titanium dioxide per 100 gal) of paint and was applied to the primed cedar panels at a spread rate of 11 $meter^2$ per liter (450 square feet per gallon). After drying for at least 12 hours, the panels were exposed outdoors facing south at an angle of 45 degrees at Spring House, Pennsylvania, until the exposed panels developed a chalk rating of ASTM 3 or 4 as defined by the ASTM method D 4214 for evaluating the degree of chalk. The substrate was then divided into 5 cm wide strip sections. The aqueous coating compositions were applied as a base coat by brush at an equal spread rate. The spread rate was determined by the weighing of the panel after application of the aqueous coating composition. The application rate was 11 $meter^2$ per liter (450 square feet per gallon). The coated samples were allowed to dry for 4 hours. The aqueous coating composition were then applied as a top coat in the same manner as the base coat. The panels were then dried for approximately

24 hours at 25 °C and 50 % relative humidity. The ASTM D-3359 cross hatch tape pull method was used to evaluate adhesion of the dried aqueous coating composition to the chalky substrate. The percent of coating retained after the tape was pulled from the test area was measured. A value of 100 indicated complete adhesion of the dried coating to the chalky substrate. A value of zero indicated complete removal of the dried coating to the chalky substrate. An acceptable level of crosshatch adhesion was a value of at least 70.

Table 3.1 -

| Adhesion of Dried Coatings to Chalky Substrate | | |
|---|---|---|
| Example | Cross Hatch Adhesion | Surfactants |
| Example 1.1 | 100 | A, B |
| Example 1.2 | 100 | A, B |
| Example 1.3 | 100 | A, B |
| Comparative A | 0 | A |
| Comparative B | 0 | A |
| Comparative C | 0 | A |
| Comparative D | 20 | C, D |

The results in Table 3.1 show that dried coatings prepared from the aqueous coating compositions that contained acetoacetoxy functional polymer particles and at least one $C_8$-$C_{18}$ alkyl ethoxylated phosphate surfactant having 20 to 100 ethylene oxide group (Surfactant B), as exemplified by Examples 1.1 to 1.3, had acceptable levels of crosshatch adhesion to a chalky substrate. In comparison, the dried coatings prepared from comparative aqueous coating compositions containing the acetoacetoxy functional polymer particles but absent the $C_8$-$C_{18}$ alkyl ethoxylated phosphate surfactant having 20 to 100 ethylene oxide group, as exemplified by Comparatives A to D, had unacceptable levels of crosshatch adhesion to a chalky substrate. Further, the comparative coating prepared from the comparative aqueous coating composition, Comparative D, which contained alkylphenol ethoxylated phosphate surfactants as substitutes for the alkyl ethoxylated phosphate surfactant, Surfactant B, exhibited an unacceptable level of crosshatch adhesion.

## Claims

**1.** An aqueous polymer dispersion comprising:

a) an aqueous medium;
b) acetoacetyl functional polymer particles dispersed in said aqueous medium, wherein said acetoacetyl functional polymer particles are prepared by polymerization of

i) acetoacetyl functional monomers having the following structure:

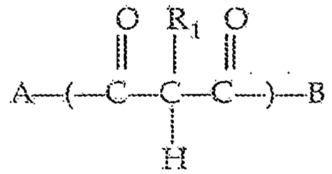

;

wherein A is either:

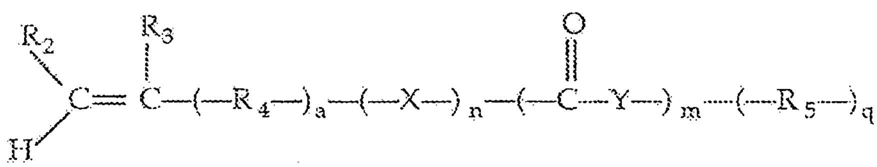

or

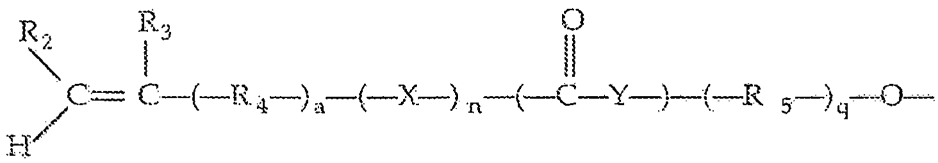

wherein $R_1$ is selected from H, alkyl having 1 to 10 carbon atoms, and phenyl; $R_2$ is selected from H, alkyl having 1 to 10 carbon atoms, phenyl, halo, $CO_2CH_3$, and CN;
wherein $R_3$ is selected from H, alkyl having 1 to 10 carbon atoms, phenyl, and halo;
wherein $R_4$ is selected from alkylene having 1 to 10 carbon atoms and phenylene;
wherein $R_5$ is selected from alkylene having 1 to 10 carbon atoms and phenylene;
wherein a, m, n, and q are independently selected from 0 and 1; wherein each of X and Y is selected from -NH- and -O-; and B is selected from A, alkyl having 1 to 10 carbon atoms, phenyl, and heterocyclic groups;

ii) non-ionic monomer; and optionally
iii) ionic monomer;

and
c) at least one alkyl ethoxylated phosphate surfactant comprising a $C_8$ to $C_{18}$ alkyl group attached to a polyoxyethylene chain having an average degree of polymerization in the range of from 20 to 100.

**2.** The aqueous polymer dispersion according to claim 1 wherein said acetoacetyl functional polymer particles comprise as polymerized units, based on weight of said acetoacetyl functional polymer particles:

a) from 0.1 to 20 weight % acetoacetyl functional monomer;
b) from 70 to 99.9 weight % nonionic monomer; and
c) from 0 to 10 weight % ionic monomer.

**3.** The aqueous polymer dispersion according to claim 1 wherein said average degree of polymerization of said polyoxyethylene chain is in the range of from 25 to 50.

**4.** The aqueous polymer dispersion according to claim 1 comprising from 0.1 to 3 weight % of said at least one alkyl ethoxylated phosphate surfactant, based on weight of said acetoacetyl functional polymer particles.

**5.** The aqueous polymer dispersion according to claim 1 further comprising a material selected from the group consisting of titanium dioxide, zinc oxide, voided polymer particles, clay, and calcium carbonate.

**6.** A method for preparing a coated substrate, comprising the steps of:

a) providing an aqueous polymer dispersion comprising: an aqueous medium; acetoacetyl functional polymer particles dispersed in said aqueous medium, wherein said acetoacetyl functional polymer particles are prepared by polymerization of

i) acetoacetyl functional monomers having the following structure:

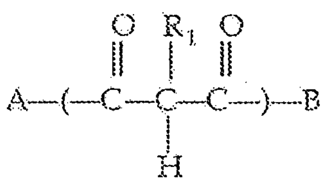
;

wherein A is either:

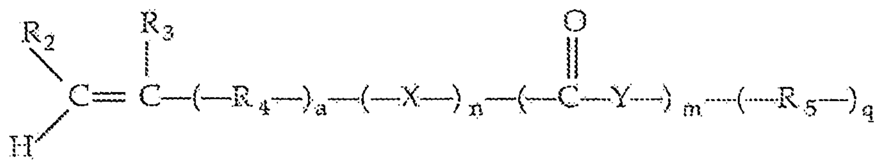

or

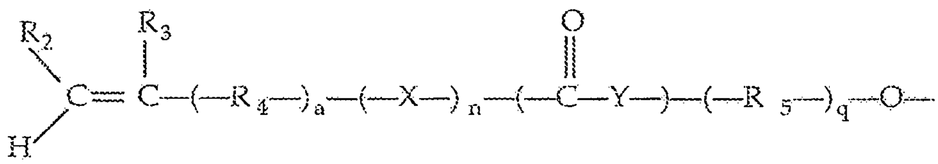

wherein $R_1$ is selected from H, alkyl having 1 to 10 carbon atoms, and phenyl; $R_2$ is selected from H, alkyl having 1 to 10 carbon atoms, phenyl, halo, $CO_2CH_3$, and CN;
wherein $R_3$ is selected from H, alkyl having 1 to 10 carbon atoms, phenyl, and halo;
wherein $R_4$ is selected from alkylene having 1 to 10 carbon atoms and phenylene;
wherein $R_5$ is selected from alkylene having 1 to 10 carbon atoms and phenylene;
wherein a, m, n, and q are independently selected from 0 and 1; wherein each of X and Y is selected from -NH- and -O-; and B is selected from A, alkyl having 1 to 10 carbon atoms, phenyl, and heterocyclic groups;

ii) non-ionic monomer; and optionally
iii) ionic monomer; and at least one alkyl ethoxylated phosphate surfactant comprising a C8 to C18 alkyl group attached to a polyoxyethylene chain having an average degree of polymerization in the range of from 20 to 100;

b) applying said aqueous polymer dispersion to a substrate; and
c) drying or allowing to dry said aqueous polymer dispersion applied to said substrate to provide said coated substrate.

**7.** The method according to claim 6 wherein said acetoacetyl functional polymer particles comprise as polymerized units, based on weight of said acetoacetyl functional polymer particles:

a) from 0.1 to 20 weight % acetoacetyl functional monomer;
b) from 70 to 99.9 weight % nonionic monomer; and
c) from 0 to 10 weight % ionic monomer.

**8.** The method according to claims 6 wherein said average degree of polymerization of said polyoxyethylene chain is in the range of from 25 to 50.

**9.** The method according to claim 6 wherein said aqueous polymer dispersion comprises from 0.1 to 3 weight % of said at least one alkyl ethoxylated phosphate surfactant, based on weight of said acetoacetyl functional polymer particles.

**10.** The aqueous polymer dispersion according to claim 1 wherein the acetoacetyl functional monomer is

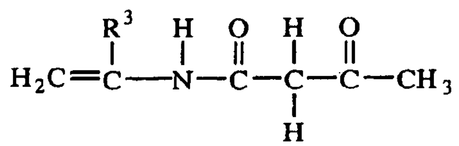

wherein $R^3$ is H, methyl, or combinations thereof.

**Patentansprüche**

1. Eine wässrige Polymerdispersion, die Folgendes beinhaltet:

   a) ein wässriges Medium;
   b) acetoacetylfunktionelle Polymerpartikel, die in dem wässrigen Medium dispergiert sind, wobei die acetoacetylfunktionellen Polymerpartikel durch die Polymerisation von Folgendem hergestellt werden:

      i) acetoacetylfunktionellen Monomeren mit der folgenden Struktur:

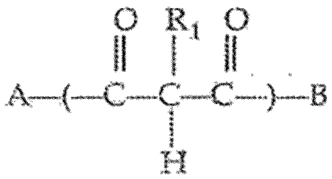

;

      wobei A Folgendes ist: entweder

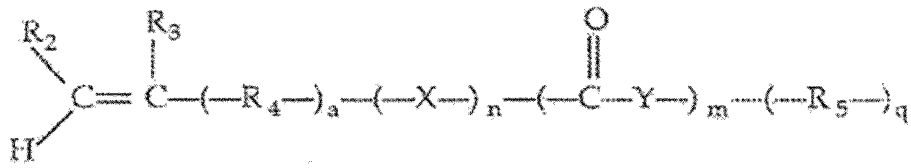

      oder

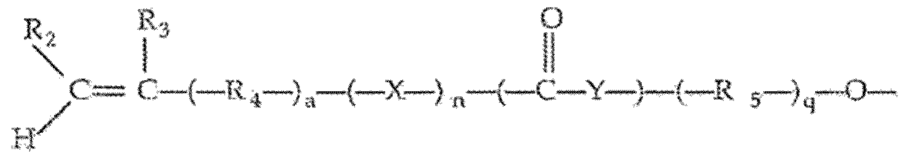

      wobei $R_1$ ausgewählt ist aus H, Alkyl mit 1 bis 10 Kohlenstoffatomen und Phenyl; $R_2$ ausgewählt ist aus H, Alkyl mit 1 bis 10 Kohlenstoffatomen, Phenyl, Halogen, $CO_2CH_3$ und CN; wobei $R_3$ ausgewählt ist aus H, Alkyl mit 1 bis 10 Kohlenstoffatomen, Phenyl und Halogen; wobei $R_4$ ausgewählt ist aus Alkylen mit 1 bis 10 Kohlenstoffatomen und Phenylen; wobei $R_5$ ausgewählt ist aus Alkylen mit 1 bis 10 Kohlenstoffatomen und Phenylen;
      wobei a, m, n und q unabhängig ausgewählt sind aus 0 und 1; wobei jedes von X und Y ausgewählt ist aus -NH- und -O-; und B ausgewählt ist aus A, Alkyl mit 1 bis 10 Kohlenstoffatomen, Phenyl und heterocyclischen Gruppen;
      ii) nichtionischem Monomer; und optional
      iii) ionischem Monomer;

   und
   c) mindestens ein alkylethoxyliertes Phosphattensid, das eine $C_8$- bis $C_{18}$-Alkylgruppe beinhaltet, die an einer Polyoxyethylenkette mit einem durchschnittlichen Polymerisationsgrad in dem Bereich von 20 bis 100 hängt.

2. Wässrige Polymerdispersion gemäß Anspruch 1, wobei die acetoacetylfunktionellen Polymerpartikel als polymerisierte Einheiten, bezogen auf das Gewicht der acetoacetylfunktionellen Polymerpartikel, Folgendes beinhalten:

   a) zu von 0,1 bis 20 Gew.-% acetoacetylfunktionelles Monomer;
   b) zu von 70 bis 99,9 Gew.-% nichtionisches Monomer; und
   c) zu von 0 bis 10 Gew.-% ionisches Monomer.

**3.** Wässrige Polymerdispersion gemäß Anspruch 1, wobei der durchschnittliche Polymerisationsgrad der Polyoxyethylenkette in dem Bereich von 25 bis 50 liegt.

**4.** Wässrige Polymerdispersion gemäß Anspruch 1, die zu von 0,1 bis 3 Gew.-% das mindestens eine alkylethoxylierte Phosphattensid, bezogen auf das Gewicht der acetoacetylfunktionellen Polymerpartikel, beinhaltet.

**5.** Wässrige Polymerdispersion gemäß Anspruch 1, die ferner ein Material beinhaltet, das ausgewählt ist aus der Gruppe, bestehend aus Titandioxid, Zinkoxid, Polymerpartikeln mit Hohlraum, Ton und Calciumcarbonat.

**6.** Ein Verfahren zum Herstellen eines beschichteten Substrats, das die folgenden Schritte beinhaltet:

a) Bereitstellen einer wässrigen Polymerdispersion, die Folgendes beinhaltet: ein wässriges Medium; acetoacetylfunktionelle Polymerpartikel, die in dem wässrigen Medium dispergiert sind, wobei die acetoacetylfunktionellen Polymerpartikel durch die Polymerisation von Folgendem hergestellt werden:

i) acetoacetylfunktionellen Monomeren mit der folgenden Struktur:

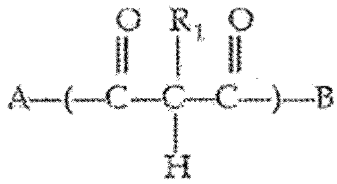

;

wobei A Folgendes ist: entweder

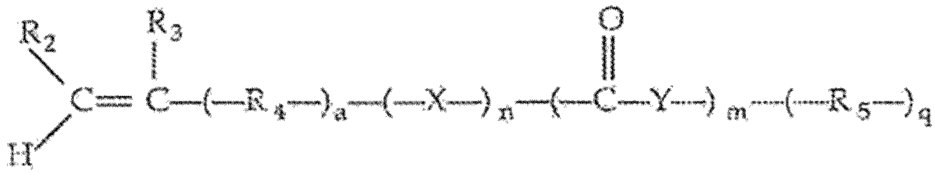

oder

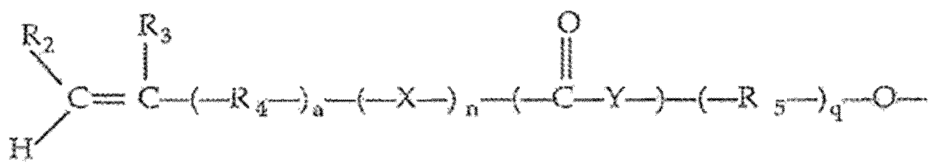

wobei $R_1$ ausgewählt ist aus H, Alkyl mit 1 bis 10 Kohlenstoffatomen und Phenyl; $R_2$ ausgewählt ist aus H, Alkyl mit 1 bis 10 Kohlenstoffatomen, Phenyl, Halogen, $CO_2CH_3$ und CN; wobei $R_3$ ausgewählt ist aus H, Alkyl mit 1 bis 10 Kohlenstoffatomen, Phenyl und Halogen; wobei $R_4$ ausgewählt ist aus Alkylen mit 1 bis 10 Kohlenstoffatomen und Phenylen; wobei $R_5$ ausgewählt ist aus Alkylen mit 1 bis 10 Kohlenstoffatomen und Phenylen; wobei a, m, n und q unabhängig ausgewählt sind aus 0 und 1; wobei jedes von X und Y ausgewählt ist aus -NH- und -O-; und B ausgewählt ist aus A, Alkyl mit 1 bis 10 Kohlenstoffatomen, Phenyl und heterocyclischen Gruppen;
ii) nichtionischem Monomer; und optional
iii) ionischem Monomer; und mindestens ein alkylethoxyliertes Phosphattensid, das eine $C_8$- bis $C_{18}$-Alkylgruppe beinhaltet, die an einer Polyoxyethylenkette mit einem durchschnittlichen Polymerisationsgrad in dem Bereich von 20 bis 100 hängt;

b) Aufbringen der wässrigen Polymerdispersion auf ein Substrat; und

c) Trocknen oder Trocknenlassen der auf das Substrat aufgebrachten wässrigen Polymerdispersion, um das beschichtete Substrat bereitzustellen.

**7.** Verfahren gemäß Anspruch 6, wobei die acetoacetylfunktionellen Polymerpartikel als polymerisierte Einheiten, bezogen auf das Gewicht der acetoacetylfunktionellen Polymerpartikel, Folgendes beinhalten:

a) zu von 0,1 bis 20 Gew.-% acetoacetylfunktionelles Monomer;
b) zu von 70 bis 99,9 Gew.-% nichtionisches Monomer; und
c) zu von 0 bis 10 Gew.-% ionisches Monomer.

**8.** Verfahren gemäß Anspruch 6, wobei der durchschnittliche Polymerisationsgrad der Polyoxyethylenkette in dem Bereich von 25 bis 50 liegt.

**9.** Verfahren gemäß Anspruch 6, wobei die wässrige Polymerdispersion zu von 0,1 bis 3 Gew.-% das mindestens eine alkylethoxylierte Phosphattensid, bezogen auf das Gewicht der acetoacetylfunktionellen Polymerpartikel, beinhaltet.

**10.** Wässrige Polymerdispersion gemäß Anspruch 1, wobei das acetoacetylfunktionelle Monomer Folgendes ist:

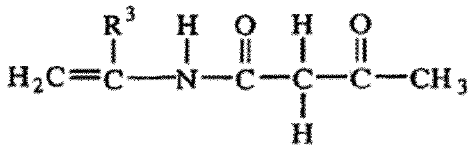

wobei $R^3$ H, Methyl oder Kombinationen davon ist.

## Revendications

**1.** Une dispersion aqueuse de polymère comprenant :

a) un milieu aqueux;
b) des particules de polymère à fonctionnalité acétoacétyle dispersées dans ledit milieu aqueux, dans laquelle lesdites particules de polymère à fonctionnalité acétoacétyle sont préparées par polymérisation de

i) monomères à fonctionnalité acétoacétyle ayant la structure suivante :

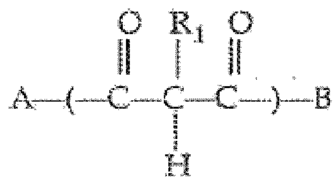

;

dans laquelle A est soit :

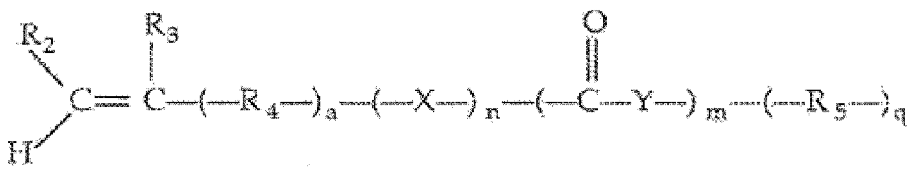

soit

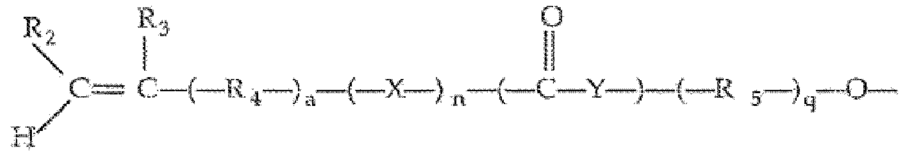

dans laquelle $R_1$ est sélectionné parmi H, un alkyle ayant 1 à 10 atomes de carbone, et un phényle ; $R_2$ est sélectionné parmi H, un alkyle ayant 1 à 10 atomes de carbone, un phényle, un halo, $CO_2CH_3$, et CN ; dans laquelle $R_3$ est sélectionné parmi H, un alkyle ayant 1 à 10 atomes de carbone, un phényle, et un halo ; dans laquelle $R_4$ est sélectionné parmi un alkylène ayant 1 à 10 atomes de carbone et un phénylène ; dans laquelle $R_5$ est sélectionné parmi un alkylène ayant 1 à 10 atomes de carbone et un phénylène ; dans laquelle a, m, n, et q sont indépendamment sélectionnés parmi 0 et 1 ; dans laquelle X et Y sont chacun sélectionnés parmi -NH- et -O- ; et B est sélectionné parmi A, un alkyle ayant 1 à 10 atomes de carbone, un phényle, et des groupes hétérocycliques ;
ii) un monomère non ionique ; et facultativement
iii) un monomère ionique ;

et
c) au moins un agent tensio-actif phosphate éthoxylé d'alkyle comprenant un groupe alkyle en $C_8$ à $C_{18}$ fixé sur une chaîne polyoxyéthylène ayant un degré moyen de polymérisation compris dans la gamme allant de 20 à 100.

**2.** La dispersion aqueuse de polymère selon la revendication 1 dans laquelle lesdites particules de polymère à fonctionnalité acétoacétyle comprennent en tant qu'unités polymérisées, rapporté au poids desdites particules de polymère à fonctionnalité acétoacétyle :

a) de 0,1 à 20 % en poids de monomère à fonctionnalité acétoacétyle ;
b) de 70 à 99,9 % en poids de monomère non ionique ; et
c) de 0 à 10 % en poids de monomère ionique.

**3.** La dispersion aqueuse de polymère selon la revendication 1 dans laquelle ledit degré moyen de polymérisation de ladite chaîne polyoxyéthylène est compris dans la gamme allant de 25 à 50.

**4.** La dispersion aqueuse de polymère selon la revendication 1 comprenant de 0,1 à 3 % en poids dudit au moins un agent tensio-actif phosphate éthoxylé d'alkyle, rapporté au poids desdites particules de polymère à fonctionnalité acétoacétyle.

**5.** La dispersion aqueuse de polymère selon la revendication 1 comprenant en sus une matière sélectionnée dans le groupe consistant en le dioxyde de titane, l'oxyde de zinc, des particules de polymère vidées, l'argile, et le carbonate de calcium.

**6.** Une méthode pour préparer un substrat revêtu comprenant les étapes consistant à :

a) fournir une dispersion aqueuse de polymère comprenant : un milieu aqueux ; des particules de polymère à fonctionnalité acétoacétyle dispersées dans ledit milieu aqueux, lesdites particules de polymère à fonctionnalité acétoacétyle étant préparées par polymérisation de

i) monomères à fonctionnalité acétoacétyle ayant la structure suivante :

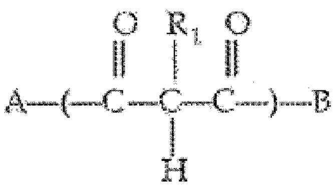

;

dans laquelle A est soit :

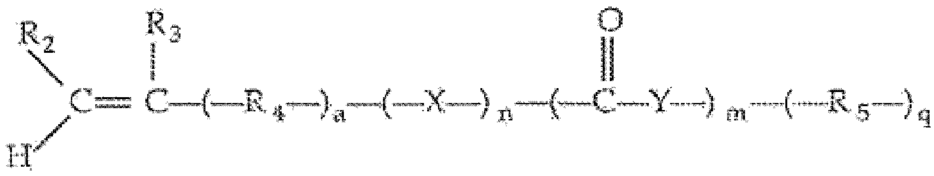

soit

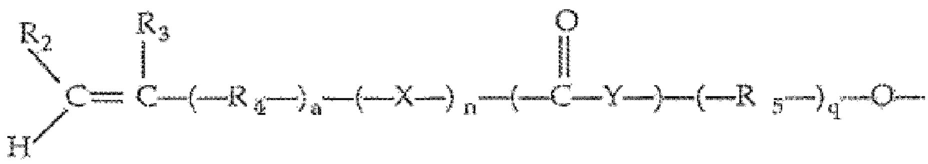

dans laquelle $R_1$ est sélectionné parmi H, un alkyle ayant 1 à 10 atomes de carbone, et un phényle ; $R_2$ est sélectionné parmi H, un alkyle ayant 1 à 10 atomes de carbone, un phényle, un halo, $CO_2CH_3$, et CN ; dans laquelle $R_3$ est sélectionné parmi H, un alkyle ayant 1 à 10 atomes de carbone, un phényle, et un halo ; dans laquelle $R_4$ est sélectionné parmi un alkylène ayant 1 à 10 atomes de carbone et un phénylène ; dans laquelle $R_5$ est sélectionné parmi un alkylène ayant 1 à 10 atomes de carbone et un phénylène ; dans laquelle a, m, n, et q sont indépendamment sélectionnés parmi 0 et 1 ; dans laquelle X et Y sont chacun sélectionnés parmi -NH- et -O- ; et B est sélectionné parmi A, un alkyle ayant 1 à 10 atomes de carbone, un phényle, et des groupes hétérocycliques ;
ii) un monomère non ionique ; et facultativement
iii) un monomère ionique ; et au moins un agent tensio-actif phosphate éthoxylé d'alkyle comprenant un groupe alkyle en $C_8$ à $C_{18}$ fixé sur une chaîne polyoxyéthylène ayant un degré moyen de polymérisation compris dans la gamme allant de 20 à 100 ;

b) appliquer ladite dispersion aqueuse de polymère sur un substrat ; et
c) sécher ou laisser sécher ladite dispersion aqueuse de polymère appliquée sur ledit substrat pour fournir ledit substrat revêtu.

**7.** La méthode selon la revendication 6 dans laquelle lesdites particules de polymère à fonctionnalité acétoacétyle comprennent en unités polymérisées, rapporté au poids desdites particules de polymère à fonctionnalité acétoacétyle :

a) de 0,1 à 20 % en poids de monomère à fonctionnalité acétoacétyle ;
b) de 70 à 99,9 % en poids de monomère non ionique ; et
c) de 0 à 10 % en poids de monomère ionique.

**8.** La méthode selon la revendication 6 dans laquelle ledit degré moyen de polymérisation de ladite chaîne polyoxyéthylène est compris dans la gamme allant de 25 à 50.

**9.** La méthode selon la revendication 6 dans laquelle ladite dispersion aqueuse de polymère comprend de 0,1 à 3 % en poids dudit au moins un agent tensio-actif phosphate éthoxylé d'alkyle, rapporté au poids desdites particules de polymère à fonctionnalité acétoacétyle.

**10.** La dispersion aqueuse de polymère selon la revendication 1 dans laquelle le monomère à fonctionnalité acétoacétyle est

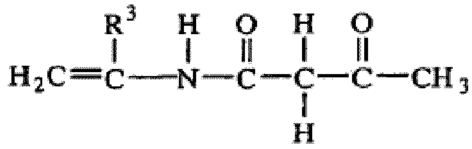

dans laquelle $R^3$ est H, un méthyle, ou des combinaisons de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1203796 A
- EP 0697417 A
- US 4771100 A
- US 5356968 A
- US 5264530 A

### Non-patent literature cited in the description

- **FOX.** *Bulletin of the American Physical Society,* 1956, vol. 1, 3, 123